# EUROPÄISCHE PATENTSCHRIFT

(11) **EP 1 602 584 B1**
(45) Veröffentlichungstag und Bekanntmachung des Hinweises auf die Patenterteilung: **21.03.2007**
(21) Anmeldenummer: 05008452.4
(22) Anmeldetag: 19.04.2005
(51) Int. Cl.: B65B 35/50, B65G 57/03, B65G 47/82

(54) **Vorrichtung zur Stapelbildung von Packgut und Übergabe des Packgutstapels in ein Packguttransportsystem**
Device for stacking of goods and transferring of stacked goods in a transport system
Dispositif pour la formation de piles des marchandises et le transfert de marchandises empilées dans un système de transport

(30) Priorität: 01.06.2004 DE 102004026612
(43) Veröffentlichungstag der Anmeldung: 07.12.2005
(73) Patentinhaber: UHLMANN PAC-SYSTEME GmbH & Co. KG, 88471 Laupheim (DE)
(72) Erfinder: Rodi, Wolfgang, 88471 Baustetten (DE)
(74) Vertreter: Hentrich, Swen

(56) Entgegenhaltungen:
- EP-A- 1 155 983
- DE-U1- 20 304 880
- US-A- 3 633 739

## Beschreibung

Die Erfindung betrifft eine Vorrichtung zur Stapelbildung von Packgut und Übergabe des Packgutstapels in ein Packguttransportsystem, mit einer das Packgut zu dem Packguttransportsystem fördernden Zuführeinheit die seitlich von und parallel zu dem Packguttransportsystem angeordnet ist oberhalb eines Kassettenmoduls mit mindestens einem Stapelschacht, daß das Kassettenmodul während des mittels eines senkrecht zur Fördereinrichtung verstellbaren Schiebers bewirkten Transfers des fertigen Packgutstapels aus dem Stapelschaft in das Packguttransportsystem in Förderrichtung synchron zu dem Packguttransportsystem verstellbar ist.

Pharmazeutische Produkte werden häufig in Blisterpackungen als Packgut verpackt, die in Thermoformmaschinen aus Folien hergestellt und als vereinzelte Blisterpackungen bereitgestellt werden. In der Regel werden mehrere derartige Blisterpackungen in einem Faltschachtelkarton ausgeliefert, so daß Vorrichtungen der eingangs genannten Art als Koppelglieder zwischen den Thermoformmaschinen und den Kartonierern erforderlich sind. Problematisch ist dabei, bei einer hohen Leistungsfähigkeit derartiger Vorrichtungen eine gute Prozeßsicherheit zu erreichen, da da die Handhabung der Blister als Packgut zur Bildung des Packgutstapels aufwendig ist und häufig Probleme auftreten, wenn zur Bildung des Packgutstapels das Packgut unter Ausnutzung der Schwerkraft übereinandergeschichtet wird, also der Packgutstapel von unten mit unterschiedlichen Fallhöhen des Packguts aufgebaut wird. Während des freien Falls kann das Packgut sich verdrehen, wobei schon geringfügige Drehungen zu Produktionsstörugen führen können.

Aus der US-A-3 633 739 ist eine Vorrichtung der eingangs genannten Art bekannt, in der zur Kontrolle der Bewegung des Packguts bei Stapelbildung eine Aufteilung der Gesamtfallstrecke des Packguts in drei kürzere Fallstrecken vorgesehen ist. Der mit dieser Vorrichtung verbundene Nachteil besteht darin, daß das Packgut unterschiedlich große Fallstrecken zu durchlaufen hat und die Gefahr des Verdrehens des Packguts bei der Stapelbildung weiterhin gegeben ist. Gerade für die Stapelbildung von Blisterpackungen ist diese Kontrolle der Bewegung des Packguts nicht ausreichend.

Der Erfindung liegt daher die Aufgabe zugrunde, eine Vorrichtung der eingangs genannten Art so auszubilden, daß während des gesamten Verarbeitungsprozesses eine möglichst hohe Kontrolle der Bewegung des Packguts gegeben ist.

Diese Aufgabe wird nach der Erfindung bei einer Vorrichtung der eingangs genannten Art dadurch gelöst, daß dem Kassettenmodul ein Absenker zugeordnet ist zur Verstellung der Höhe des Bodens des Stapelschachtes in Abhängigkeit der Anzahl des in dem Stapelschacht gestapelten Packguts. Dem Kassettenmodul ein Absenker zugeordnet ist zur Verstellung der Höhe des Bodens des Stapelschachts in Abhängigkeit der Anzahl des in dem Stapelschacht gestapelten Packguts.

Mit einer derartigen Vorrichtung ist der Vorteil verbunden, daß zwar unverändert der Packgutstapel von unten aufgebaut wird, daß aber stets eine konstante Fallhöhe gewährleistet ist, da mittels des Absenkers der Boden des Stapelschachtes geeignet positioniert werden kann. Der Abwurf des Packgutes von der Zuführeinheit in den Stapelschacht ist während des gesamten Prozesses der einzige Schritt, bei dem keine maschinell kontrollierte Bewegung des Packgutes vorliegt, wobei aber durch die geringe Fallhöhe sichergestellt ist, daß das Packgut keine von der Norm abweichende Bewegung ausführen kann.

Vorteilhaft ist es dabei, wenn das Packguttransportsystem als umlaufendes Transportband gebildet ist mit gleichmäßig über den Umfang verteilt angeordneten Packgutzellen, und daß der Stapelschacht mehrfach vorgesehen ist in einer zur Anordnung der Packgutzellen korrespondierenden Anordnung. Mit dieser Gestaltung ist eine Steigerung der Leistungsfähigkeit der erfindungsgemäßen Vorrichtung erreicht, wobei über die Variation der Anzahl der Stapelschächte eine Anpassung an die erforderliche Leistungsfähigkeit erreicht werden kann. Zu betonen ist nochmals, daß auch während der Übergabe des Packgutstapels eine permanente seitliche Führung entweder durch die Seitenwangen des Stapelschachtes oder durch die Packgutzellen sichergestellt ist.

Hinsichtlich der Einfachheit des mechanischen Aufbaus der erfindungsgemäßen Vorrichtung ist es bevorzugt, wenn zum hängenden Transport des Packguts die Zuführeinheit als Saugband ausgebildet ist, da so keine Mittel bereitgestellt werden müssen, die das Packgut gegen die Wirkung der Schwerkraft unterstützen. Diese Mittel müssten nämlich zum Ablagern des Packguts in dem Stapelschacht aus der Falllinie des Packguts entfernt werden, während durch die Verwendung des Saugbandes lediglich sichergestellt werden muß, daß zum geeigneten Zeitpunkt die Wirkung des Unterdruckes kompensiert wird.

Günstig hinsichtlich eines geringen Platzbedarfes ist es, wenn dem Kassettemodul ein geregelter Antrieb zur synchronen Verstellung mit dem Packguttransportsystem während des Überschiebens zur Zurückführung in eine Stapelbildungsposition nach dem Überschieben zugeordnet ist, da so keine andauernde in Förderrichtung des Packguttransportsystems erfolgende Verstellung des Kassettenmoduls, die zum Zwecke des Überschiebens synchronisiert werden muß, zu erfolgen hat, sondern das Kassettenmodul stets nach dem Überschieben in die Stapelbildungsposition zurückgeführt werden kann, um einen neuen Zyklus zu starten.

Um den gezielten Abwurf des Packgutes in den Stapelschacht zu ermöglichen, weist die Zuführeinheit - bei in der Stapelbildungsposition befindlichem Kassettenmodul oberhalb jedes Stapelschachtes jeweils einen Sensor zur Erfassung der korrekten Lage des Packgutes relativ zum Stapelschachtes auf. Dann bietet es sich an, daß die Zuführeinheit für jeden Stapelschacht einen höhenverstellbaren Stopper aufweist, der in Abhängigkeit des Sensorsignals in die Bahn des Packgutes verstellt werden kann, so daß das Packgut in der korrekten Lage für die Überführung in den Stapelschacht positioniert ist. Diese Überführung wird in einfacher Weise dadurch bewirkt, daß die Zuführeinheit für jeden Stapelschacht einen höhenverstellbaren Abschläger aufweist, der das Packgut von dem Saugband wegdrückt, so daß die Wirkung des Unterdrucks unterbunden ist und das Packgut in den Stapelschacht fallen kann.

Um den konstruktiven Aufbau der Vorrichtung einfach zu halten, ist vorgesehen, daß der Absenker zwei mit gegenseitigem Abstand angeordnete Führungsstifte aufweist, auf denen höhenverstellbar eine Absenkerleiste geführt ist, die für jeden Stapelschacht dessen Boden trägt, also auch bei einer Mehrzahl von verwendeten Stapelschächten die Verstellung eines einzigen Absenkers ausreicht, um mehrere Packgutstapel zu bilden.

Um beim Überschieben des Packgutstapels eine gleichmäßige, über dessen gesamte Höhe erfolgende Kraftausübung zu gewährleisten, weist der Schieber jedem Packgutstapel zugeordnete, beim Einschieben zur Anlage kommende, Schubleisten auf.

Um die Vorrichtung variabel einsetzen zu können, ist vorgesehen, daß der Stapelschacht aus zwei Seitenwangen gebildet ist, deren gegenseitiger Abstand zur Formatanpassung veränderbar ist.

Im Rahmen der Erfindung weiterhin besonders bevorzugt ist es, wenn die Sensoren mit einer Prozeßsteuerung vernetzt sind, da so eine größere Flexibilität bei der Bildung der Packgutstapel erreicht wird und gezielt die Bildung einzelner Packgutstapel in benachbarten Stapelschächten aufeinander abgestimmt werden kann.

Im folgenden wird die Erfindung an einem in der Zeichung dargestellten Ausführungsbeispiel näher erläutert; es zeigen:
- Fig. 1: eine perspektivische, schematische Darstellung der erfindungsgemäßen Vorrichtung,
- Fig. 2: eine perspektivische, isolierte Darstellung des Kassettenmoduls,

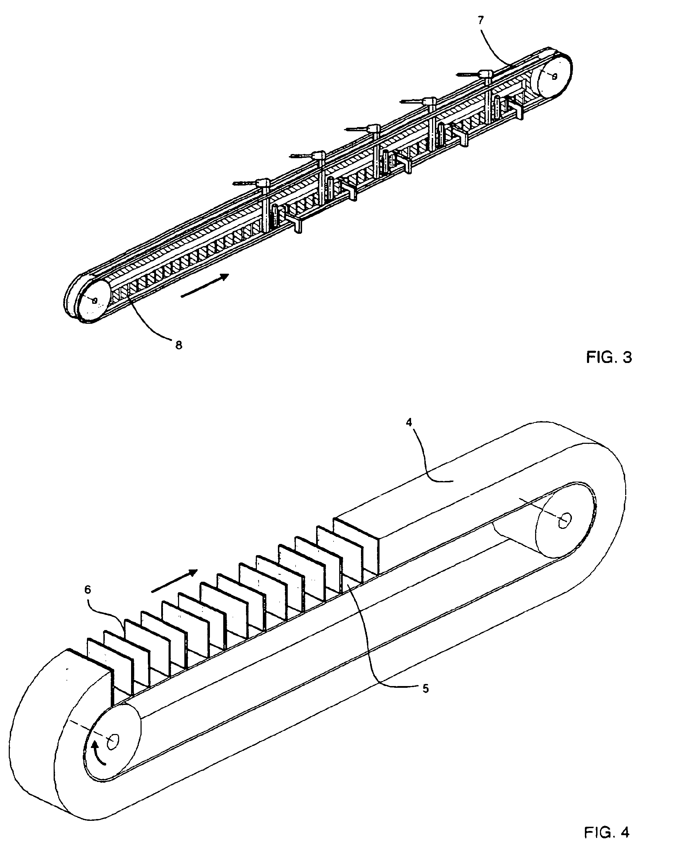

- Fig. 3: eine perspektivische, isolierte Darstellung der Zuführeinheit,
- Fig.: 4 eine perspektivische, isolierte Darstellung des Packguttransportsystems,
- Fig. 5: eine perspektivische Darstellung der Zusammenschau des Kassettenmoduls mit der Zuführeinheit und dem Packguttransportsystem,
- Fig. 6: eine der Fig. 1 entsprechende Darstellung vor Beginn der Bildung des Packgutstapels in dem ersten Stapelschacht,

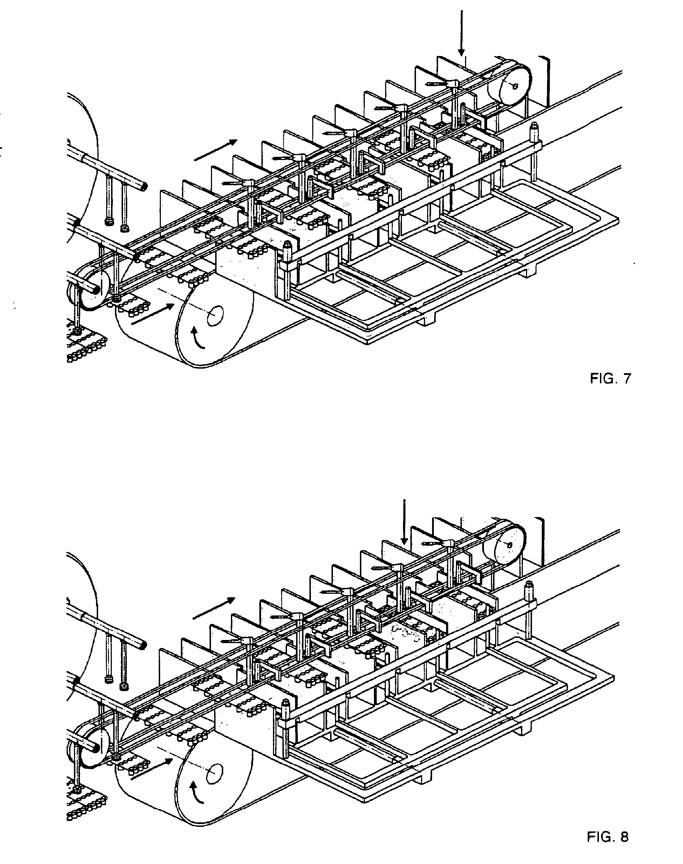

- Fig. 7: eine der Fig. 6 entsprechende Darstellung bei der Ablage des ersten Packgutes in dem ersten Stapelschacht,
- Fig. 8: eine der Fig. 6 entsprechende Darstellung bei der Ablage des ersten Packgutes in dem zweiten Stapelschacht,

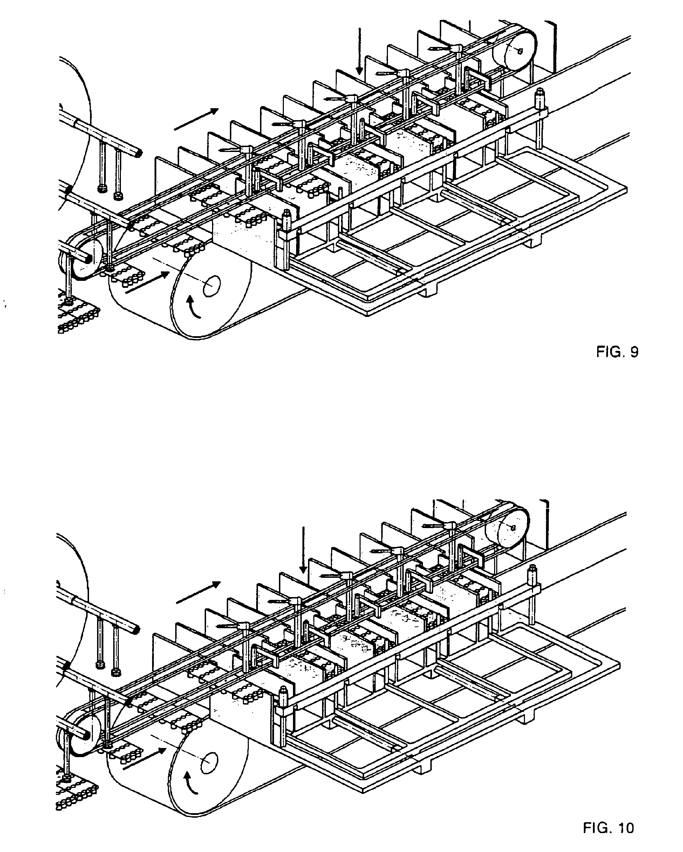

- Fig. 9: eine der Fig. 6 entsprechende Darstellung bei der Ablage des ersten Packgutes in den dritten Stapelschacht,
- Fig. 10: eine der Fig. 6 entsprechende Darstellung bei der Ablage des ersten Packgutes in den vierten Stapelschacht,
- Fig. 11: eine der Fig. 6 entsprechende Darstellung bei der Ablage des ersten Packgutes in den fünften Stapelschacht,
- Fig. 12: eine der Fig. 6 entsprechende Darstellung zur Verstellung des Absenkers um die Höhe eines Packgutes zur Bereitstellung einer konstanten Fallhöhe für die zweite Lage des Packgutes in dem Packgutstapel,
- Fig. 13: eine der Fig. 6 entsprechende Darstellung mit der Verstellung des Absenkers zur Vorbereitung der Übergabe der gebildeten Packgutstapel in das Packguttransportsystem,
- Fig. 14: eine der Fig. 6 entsprechende Darstellung mit der Verstellung des Kassettenmoduls zur Synchronisierung mit dem Packguttransportsystem,

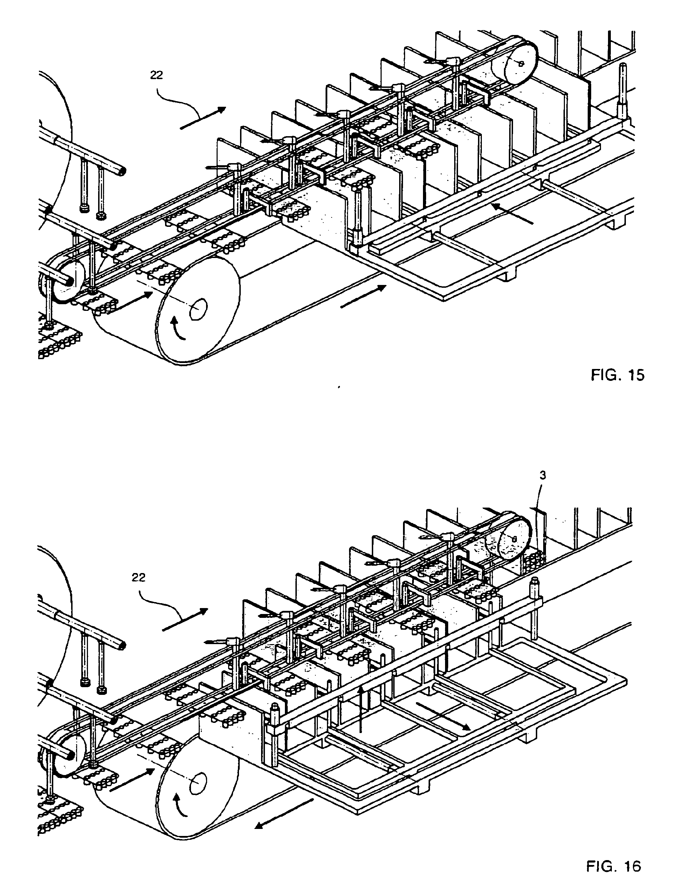

- Fig. 15: eine der Fig. 6 entsprechende Darstellung zum Überschieben der gebildeten Packgutstapel in das Packguttransportsystem, und
- Fig. 16: eine der Fig. 6 entpsrechende Darstellung zum Abtransport der Packgutstapel in dem Packguttransportsystem und der Rückkehr des Kassettenmoduls in die Stapelbildungsposition.

Die Zeichnung zeigt eine Vorrichtung 1 zur Stapelbildung von Packgut 2 und Übergabe des gebildeten Packgutstapels 3 in ein Packguttransportsystem 4, das als umlaufendes Transportband 5 gebildet ist mit gleichmäßig über den Umfang verteilt angeordneten Packgutzellen 6. Die Vorrichtung 1 weist weiterhin eine das Packgut 2 zu dem Packguttransportsystem 4 fördernde Zuführeinheit 7 auf, die zum hängenden Transport des Packgutes 2 als Saugband 8 ausgebildet ist und bei dem in der Zeichnung dargestellten Ausführungsbeispiele das durch Blisterpackungen gebildete Packgut 2 durch Sauggreifer 9 zugeführt erhält. Die Zuführeinheit 7 ist seitlich von und parallel zu dem Packguttransportsystem 4 angeordnet oberhalb eines Kassettenmoduls 10. Das Kassettenmodul 10 weist mindestens einen Stapelschacht 11, bei dem in der Zeichnung dargestellten Ausführungsbeispiel insgesamt fünf Stapelschächte 11 auf, wobei dem Kassettenmodul 10 ein Absenker 12 zugeordnet ist zur Verstellung der Höhe des Bodens jedes Stapelschachtes 11 in Abhängigkeit der Anzahl des in dem Stapelschacht 11 gestapelten Packgutes 2. Der Absenker 12 weist zwei mit gegenseitigem Abstand angeordnete Führungsstifte 17 auf, auf denen höhenverstellbar eine Absenkerleiste 18 angeschlossen ist, die für jeden Stapelschacht 11 dessen Boden trägt. Das Kassettenmodul 10 ist während des mittels eines senkrecht zur Förderrichtung 22 verstellbaren Schiebers 13 bewirkten Transfers des fertigen Packgutstapels aus dem Stapelschacht in das Packguttransportsystem 4 in Förderrichtung 22 synchron zu dem Packguttransportsystem 4 verstellbar, wozu ein geregelter Antrieb verwendet wird, der auch die Rückführung des Kassettenmoduls 10 in eine Stapelbildungsposition nach dem Überschieben der Packgutstapel 3 ermöglicht. Wenn sich das Kassettenmodul 10 in der Stapelbildungsposition befindet, ist oberhalb jedes Stapelschachtes 11 ein Sensor 14 zur Erfassung der korrekten Lage des Packgutes 2 relativ zum Stapelschacht 11 vorhanden, wobei der Sensor 14 in der Zuführeinheit 7 angeordnet ist. Die Sensoren 14 sind mit einer Prozeßsteuerung vernetzt. Die Zuführeinheit 7 weist weiterhin für jeden Stapelschacht 11 einen höhenverstellbaren Stopper 15 auf sowie einen höhenverstellbaren Abschläger 16. Der Schieber 13 weist jedem Packgutstapel zugeordnete, beim Einschieben zur Anlage kommende Schubleisten 19 auf. Der Stapelschacht 11 ist aus zwei Seitenwangen 20 gebildet, deren gegenseitiger Abstand zur Formatanpassung veränderbar ist.

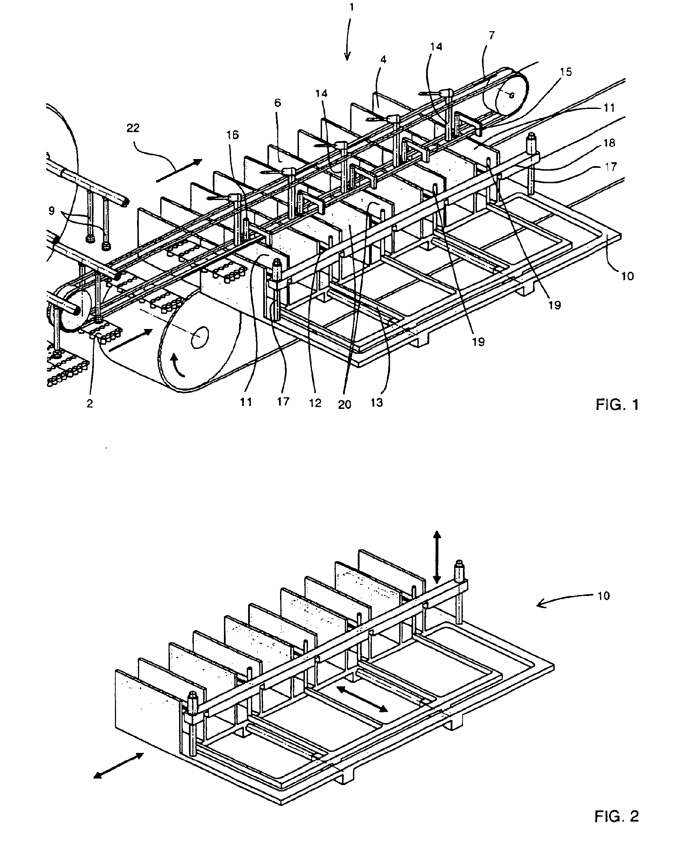

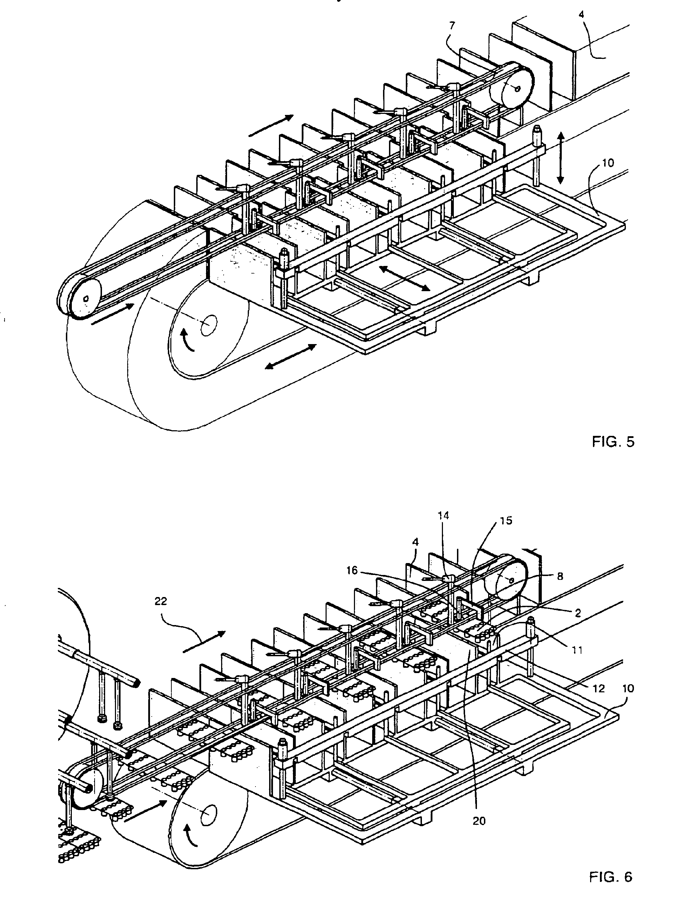

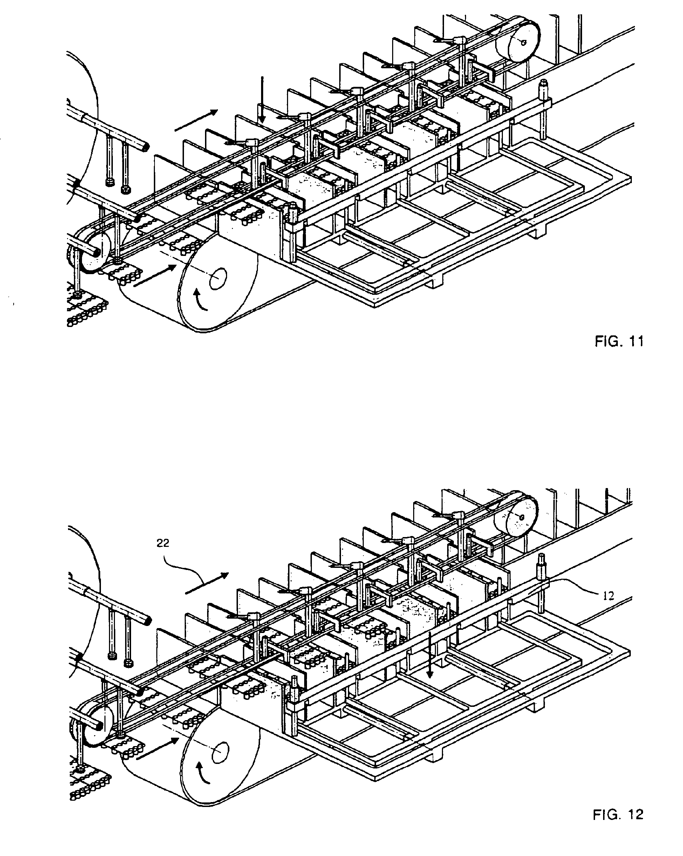

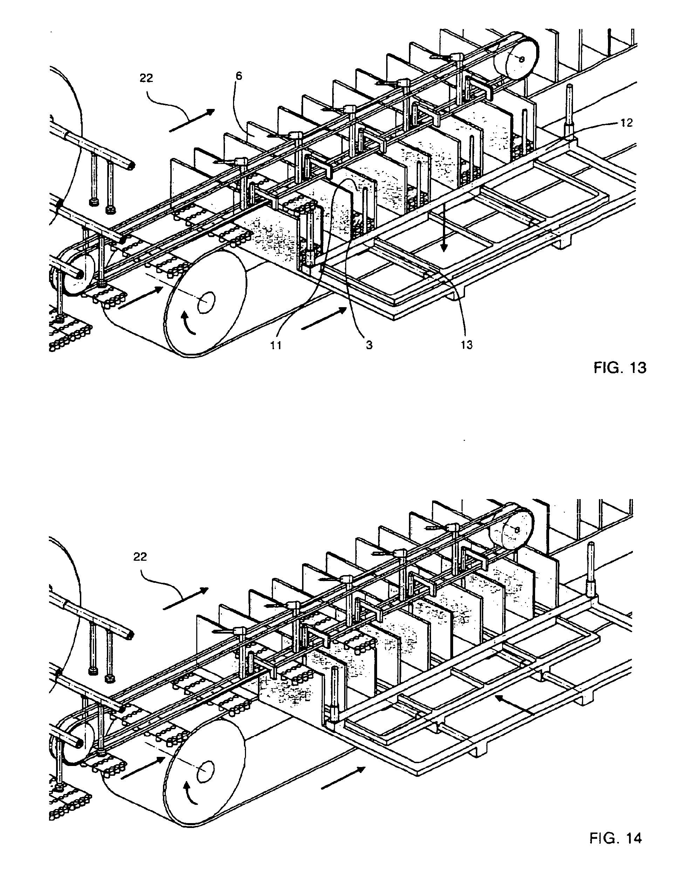

Im folgenden wird die Funktionsweise der erfindungsgemäßen Vorrichtung 1 anhand eines Zyklus zur Bildung von fünf Packgutstapeln 3 und deren Übergabe in das Packguttransportsystem 4 geschildert. Ausgangspunkt ist dazu die Situation in Figur 1, die die Zuführung des Packgutes 2 mittels des Saugbandes 8 der Zuführeinheit 7 über das Kassettenmodul 10 zeigt, das sich in der Stapelbildungsposition befindet. Figur 6 stellt dabei die Situation dar, bei der durch den dem ersten Stapelschacht 11 zugeordneten Sensor 14 die korrekte Lage des Packgutes 2 oberhalb des Stapelschachtes 11 erkannt ist, woraufhin der Stopper 15 abgesenkt wird und das Packgut 2 an diesem Stopper 15 zur Anlage kommt und sich dabei ausrichtet. Daraufhin wird der in der Zuführeinheit 7 gelagerte Abschläger 16 nach unten verstellt und der Kontakt des Packgutes 2 mit dem Saugband 8 unterbunden, so daß das Packgut 2 in den Stapelschacht 11 fällt bis auf dessen durch den Absenker 12 positionierten Boden, der sich ungefähr eine Packgutdicke unterhalb der oberen Kante der Seitenwange 20 des Stapelschachtes 11 befindet, so daß das Packgut 2 vollständig in den Stapelschacht 11 aufgenommen werden kann. Nachfolgend wiederholt sich dieser Vorgang auch bei dem zweiten, dritten, vierten und fünften Stapelschacht 11, so daß in jedem Stapelschacht 11 ein Packgut 2 aufgenommen ist. Daraufhin verfährt der Absenker 12 (Fig. 12) nach unten, bis erneut in jedem Stapelschacht 11 Platz für ein weiteres Packgut 2 bereitgestellt ist. Nachdem in jedem Stapelschacht 11 ein Packgutstapel 3 mit der erforderlichen Anzahl des Packgutes 2 gebildet ist, verfährt der Absenker 12 vollständig nach unten (Fig. 13), wobei zeitgleich das Kassettemodul 10 in Förderrichtung 22 des Packguttransportsystem beschleunigt wird, bis eine synchronisierte Bewegung vorliegt. Daran schließt sich durch den Schieber 13 das Überschieben der Packgutstapel 3 aus den Stapelschächten 11 in die Packgutzellen 6 an, wobei nach erfolgtem Überschieben der Schieber 13 in seine Ausgangslage zurückgezogen wird, das Kassettenmodul 10 in die Stapelbildungsposition zurückfährt und der Absenker 12 nach oben fährt, um die Böden der Stapelschächte 11 wieder für den Start eines neuen Zyklus zu positionieren.

## Patentansprüche

1. Vorrichtung zur Stapelbildung von Packgut (2) und Übergabe des Packgutstapels (3) in ein Packguttransportsystem (4), mit einer das Packgut (2) zu dem Packguttransportsystem (4) fördernden Zuführeinheit (7), die seitlich von und parallel zu dem Packguttransportsystem (4) angeordnet ist oberhalb eines Kassettenmoduls (10) mit mindestens einem Stapelschacht (11), wobei das Kassettenmodul (10) während des mittels eines senkrecht zur Fördereinrichtung (22) verstellbaren Schiebers (13) bewirkten Transfers des fertigen Packgutstapels (3) aus dem Stapelschaft (11) in das Packguttransportsystem (4) in Förderrichtung (22) synchron zu dem Packguttransportsystem (4) verstellbar ist, **dadurch gekennzeichnet, daß** dem Kassettenmodul (10) ein Absenker (12) zugeordnet ist zur Verstellung der Höhe des Bodens des Stapelschachts (11) in Abhängigkeit der Anzahl des in dem Stapelschacht (11) gestapelten Packguts (2).

2. Vorrichtung nach Anspruch 1, **dadurch gekennzeichnet, daß** das Packguttransportsystem (4) als umlaufendes Transportband (5) gebildet ist mit gleichmäßig über den Umfang verteilt angeordneten Packgutzellen (6), und daß der Stapelschacht (11) mehrfach vorgesehen ist in einer zur Anordnung der Packgutzellen (6) korrespondierenden Anordnung.

3. Vorrichtung nach Anspruch 1 oder 2, **dadurch gekennzeichnet, daß** zum hängenden Transport des Packguts (2) die Zuführeinheit (7) als Saugband (8) ausgebildet ist.

4. Vorrichtung nach einem der Ansprüche 1 bis 3, **dadurch gekennzeichnet, daß** dem Kassettenmodul (10) ein geregelter Antrieb zur synchronen Verstellung mit dem Packguttransportsystem (4) während des Überschiebens und zur Rückführung in eine Stapelbildungsposition nach dem Überschieben zugeordnet ist.

5. Vorrichtung nach Anspruch 4, **dadurch gekennzeichnet, daß** die Zuführeinheit (7) - bei in der Stapelbildungsposition befindlichem Kassettenmodul (10) - oberhalb jedes Stapelschachtes (11) jeweils einen Sensor (14) zur Erfassung der korrekten Lage des Packguts (2) relativ zum Stapelschacht (11) aufweist.

6. Vorrichtung nach Anspruch 5, **dadurch gekennzeichnet, daß** die Zuführeinheit (7) für jeden Stapelschacht (11) einen höhenverstellbaren Stopper (15) aufweist.

7. Vorrichtung nach Anspruch 5 oder 6, **dadurch gekennzeichnet, daß** die Zuführeinheit (7) für jeden Stapelschacht (11) einen höhenverstellbaren Abschläger (16) aufweist.

8. Vorrichtung nach einem der Ansprüche 2 bis 7, **dadurch gekennzeichnet, daß** der Absenker (12) zwei mit gegenseitigem Abstand angeordnete Führungsstifte (17) aufweist, auf denen höhenverstellbar eine Absenkerleiste (18) geführt ist, die für jeden Stapelschacht (11) dessen Boden trägt.

9. Vorrichtung nach einem der Ansprüche 1 bis 8, **dadurch gekennzeichnet, daß** der Schieber (13) jedem Packgutstapel (11) zugeordnete, beim Einschieben zur Anlage kommende, Schubleisten (19) aufweist.

10. Vorrichtung nach einem der Ansprüche 1 bis 9, **dadurch gekennzeichnet, daß** der Stapelschacht (11) aus zwei Seitenwangen (20) gebildet ist, deren gegenseitiger Abstand zur Formatanpassung veränderbar ist.

11. Vorrichtung nach einem der Ansprüche 5 bis 10, **dadurch gekennzeichnet, daß** die Sensoren (14) mit einer Prozeßsteuerung vernetzt sind.

## Claims

1. An apparatus for stacking packaged articles (2) and transferring the packaged article stack (3) into a packaged article transport system (4) comprising a feed unit (7) which conveys the packaged articles (2) to the packaged article transport system (4) and which is arranged laterally of and parallel to the packaged article transport system (4) above a cassette module (10) with at least one stack well (11), wherein the cassette module (10) is displaceable in the conveyor direction (22) synchronously with the packaged article transport system (4) during the transfer of the finished packaged article stack (3) out of the stack well (11) into the packaged article transport system (4), which is effected by means of a pusher member (13) which is displaceable perpendicularly to the conveyor direction (22), **characterised in that** a lowering device (12) is associated with the cassette module (10) for adjusting the height of the bottom of the stack well (11) in dependence on the number of packaged articles (2) stacked in the stack well (11).

2. Apparatus according to claim 1 **characterised in that** the packaged article transport system (4) is in the form of a circulating conveyor belt (5) with packaged article cells (6) arranged distributed uniformly over the periphery and there is provided a plurality of the stack wells (11) in an arrangement corresponding to the arrangement of the packaged article cells (6).

3. Apparatus according to claim 1 or claim 2 **characterised in that** for hanging transport of the packaged articles (2) the feed unit (7) is in the form of a suction belt (8).

4. Apparatus according to one of claims 1 to 3 **characterised in that** a regulated drive is associated with the cassette module (10) for synchronous displacement with the packaged article transport system (4) during the pushing transfer movement and for return to a stacking position after the pushing transfer movement.

5. Apparatus according to claim 4 **characterised in that** the feed unit (7) - when the cassette module (10) is in the stacking position - has a respective sensor (14) above each stack well (11) for detecting the correct position of the packaged articles (2) relative to the stack well (11).

6. Apparatus according to claim 5 **characterised in that** the feed unit (7) for each stack well (11) has a height-adjustable stopper (15).

7. Apparatus according to claim 5 or claim 6 **characterised in that** the feed unit (7) has for each stack well (11) a height-adjustable knock-off device (16).

8. Apparatus according to one of claims 2 to 7 **characterised in that** the lowering device (12) has two guide pins (17) which are arranged at a mutual spacing and on which a lowering bar (18) is guided adjustably in respect of height, the lowering bar carrying for each stack well (11) the bottom thereof.

9. Apparatus according to one of claims 1 to 8 **characterised in that** the pusher member (13) has thrust bars which are associated with each packaged article stack (11) and which come into contact therewith when pushing it in.

10. Apparatus according to one of claims 1 to 9 **characterised in that** the stack well (11) is formed from two side wall portions (20) whose mutual spacing is variable for the purposes of format adaptation.

11. Apparatus according to one of claims 5 to 10 **characterised in that** the sensors (14) are networked with a process control.

## Revendications

1. Dispositif pour la formation de piles de marchandises (2) et le transfert des piles (3) dans un système de transport de piles (4) avec, pour amener la marchandise (2) au système de transport de piles (4), une unité d'amenée (7) disposée latéralement et parallèlement au système de transport (4) au-dessus d'un module à casiers (10) qui comprend au moins un puits d'empilage (11) et qui, pendant le transfert de la pile finie (3) passant du puits d'empilage (11) au système de transport de piles (4) par l'action d'un tiroir (13) se déplaçant perpendiculairement au dispositif d'avancement (22), peut se déplacer en synchronisme avec le système de transport de piles (4), **caractérisé en ce qu'**au module à casiers est associé un abaisseur (12) pour faire varier la hauteur du fond du puits d'empilage (11) en fonction du nombre des marchandises (2) empilées dans le puits (11).

2. Dispositif selon la revendication 1, **caractérisé en ce que** le système de transport de piles (4) est une bande de transport continue (5), avec des cellules de marchandises (6) réparties régulièrement sur sa périphérie, et il est prévu plusieurs puits d'empilage (11) dont la disposition correspond à celle des cellules de marchandises (6).

3. Dispositif selon la revendication 1 ou 2, **caractérisé en ce que** pour assurer le transport à l'état suspendu de la marchandise (2), l'unité d'amenée (7) est constituée par une bande aspirante (8).

4. Dispositif selon une des revendications 1 à 3, **caractérisé en ce qu'**au module à casiers (10) est associé un entraînement régulé pour déplacer le module en synchronisme avec le système de transport (4) pendant le chevauchement et pour ramener ensuite le module en position de formation de piles.

5. Dispositif selon la revendication 4, **caractérisé en ce que** quand le module à casiers (10) est en position de formation de piles, l'unité d'amenée (7) présente au-dessus de chaque puits d'empilage (11) un capteur (14) pour saisir la position correcte de la marchandise (2) par rapport au puits (11).

6. Dispositif selon la revendication 5, **caractérisé en ce que** l'unité d'amenée (7) présente, pour chaque puits d'empilage (11) un stoppeur (15) réglable en hauteur.

7. Dispositif selon la revendication 5 ou 6, **caractérisé en ce que** l'unité d'amenée (7) présente, pour chaque puits d'empilage (11) un abatteur (16) réglable en hauteur.

8. Dispositif selon une des revendications 2 à 7, **caractérisé en ce que** l'abaisseur présente deux tiges de guidage (17) espacées l'une de l'autre et sur lesquelles est guidée avec réglage en hauteur, une barrette d'abaisseur (18) qui porte le fond de chaque puits d'empilage (11).

9. Dispositif selon une des revendications 1 à 8, **caractérisé en ce que** le tiroir (13) présente des barrettes de coulissement (19) associées à chaque pile de marchandises (11) et qui viennent en contact lors du coulissement.

10. Dispositif selon une des revendications 1 à 9, **caractérisé en ce que** le puits d'empilage (11) est constitué de deux joues latérales (20) dont l'espacement peut varier pour adaptation au format.

11. Dispositif selon une des revendications 5 à 10, **caractérisé en ce que** les capteurs (14) sont connectés à la commande du process.
